# EUROPÄISCHE PATENTSCHRIFT

(11) **EP 3 127 640 B1**
(45) Veröffentlichungstag und Bekanntmachung des Hinweises auf die Patenterteilung: **22.02.2023**
(21) Anmeldenummer: 15179801.4
(22) Anmeldetag: 05.08.2015
(51) Int. Cl.: B23B 31/28

(54) **SPANNEINRICHTUNG**
CLAMPING DEVICE
DISPOSITIF DE SERRAGE

(43) Veröffentlichungstag der Anmeldung: 08.02.2017
(73) Patentinhaber: MTH GbR Markus und Thomas Hiestand, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 2 218 531
- EP-A1- 2 283 955
- EP-A1- 2 295 176
- EP-A1- 2 548 681
- DE-A1-102012 011 675
- DE-B4-102007 042 432

## Beschreibung

Die Erfindung bezieht sich eine Spanneinrichtung, insbesondere für Werkzeugmaschinen, die beispielsweise mit einem Kraftspannfutter zur Halterung eines Werkstückes versehen und dessen Spannbacken mittels der Spanneinrichtung über eine axial verstellbare Zugstange als Betätigungsglied verstellbar sind, wobei die Spanneinrichtung einen umschaltbaren elektrischen Antriebsmotor zum Auslösen von Spannbewegungen, der über Antriebsstränge mit der Spanneinrichtung verbunden ist, einen Bewegungswandler zur Umsetzung der Verstellbewegungen der Rotorwelle des Antriebsmotors in die zur Betätigung der Spannbacken erforderlichen axialen Verstellbewegungen der Zugstange sowie einen Kraftspeicher zur Aufrechterhaltung der Spannkraft aufweist.

Die EP 2 295 176 A1 zeigt eine Spanneinrichtung gemäß den Oberbegriffen der Ansprüche 1 und 6 für Werkzeugmaschinen, mit einem Kraftspannfutter zur Halterung eines Werkstückes, wobei die Spannbacken der Spanneinrichtung über eine axial verstellbare Zugstange als Betätigungsglied verstellbar sind. Die Spanneinrichtung hat einen umschaltbaren elektrischen Antriebsmotor zum Auslösen von Spannbewegungen, der über Antriebsstränge mit der Spanneinrichtung verbunden ist, sowie einen Bewegungswandler zur Umsetzung der Verstellbewegungen der Rotorwelle des Antriebsmotors in die zur Betätigung der Spannbacken erforderlichen axialen Verstellbewegungen der Zugstange. Die beiden Antriebsstränge sind aus einem ersten und einem zweiten jeweils aus zwei Riemenscheiben und einem über diese geführten Zahn- oder Treibriemen bestehenden Riementrieb gebildet. Auf der Rotorwelle des Antriebsmotors ist eine Tragnabe drehfest angeordnet, auf der die Riemenscheibe des ersten Riementriebes drehfest und die Riemenscheibe des zweiten Riementriebes drehbar gelagert sind. In Spannstellung der Spanneinrichtung sind die beiden auf der Tragnabe angeordneten Riemenscheiben mit Hilfe einer Servo-Einrichtung miteinander koppelbar.

Nachteilig an dieser Spannvorrichtung ist, dass kein Kraftspeicher zur Aufrechterhaltung der Spannkraft vorhanden ist.

Auch die DE 10 2007 042 432 B4 offenbart ein derartiges Spannaggregat. Die beiden zwischen dem Antriebsmotor und dem Bewegungswandler vorgesehenen Antriebsstränge sind bei dieser Ausgestaltung durch Zahnradsätze gebildet, die mittels Elektrokupplungen gesteuert geschaltet werden. Abgesehen davon, dass die Zahnradsätze, bedingt durch die hohen erforderlichen Drehzahlen, in einem Ölbad angeordnet sein müssen, ist der Aufwand zur wechselweisen Schaltung der Elektrokupplungen demnach sehr hoch. Beim Spannen und Entspannen eines Werkstückes ist nämlich die eine Kupplung zu schließen, gleichzeitig ist aber die andere Kupplung zu öffnen, um den von dieser beeinflussbaren Antriebsstrang von der Rotorwelle des Antriebsmotors zu trennen. Des Weiteren ist während des Betriebszustandes wiederum ein Antriebsstrang triebfest und schlupffrei mit der Rotorwelle zu verbinden und über die andere Kupplung ist der Antriebsmotor abzukoppeln. Außerdem ist während des Betriebes der schlupffreie Synchronlauf der beiden Zahnradsätze zu überwachen, da ansonsten durch die Spannvorrichtung das Kraftspannfutter geöffnet wird. Dies bedingt eine große Steuerkapazität, die erfahrungsgemäß störanfällig ist. Eine sichere Betriebsweise, die vielfach gefordert wird, ist bei dieser bekannten Spanneinrichtung demnach nicht gegeben.

Aufgabe der Erfindung ist es daher, die Spanneinrichtung der Eingangs genannten Gattung in der Weise auszubilden, dass der Steuerungs- und Bauaufwand äußerst gering gehalten werden kann und mit Hilfe einer serienmäßigen NC-Steuerung zu bewerkstelligen ist. Dadurch soll die Störanfälligkeit auf ein Minimum reduziert werden, so dass ein sicherer Betrieb der Spanneinrichtung über einen längeren Zeitraum sichergestellt ist. Des Weiteren soll erreicht werden, dass keine in einem Ölbad anzuordnenden Zahnradsätze erforderlich sind und dass im Betrieb der Antriebsmotor auf einfache Weise von der Spanneinrichtung abzukoppeln ist, um den Energieaufwand gering zu halten. Auch soll bei einer Beschädigung von Bauteilen zuverlässig eine Blockierung selbsttätig ausgelöst werden, so dass die Unfallgefahr gemindert wird.

Gemäß der Erfindung wird diese Aufgabe durch eine Spanneinrichtung gemäß dem Anspruch 1 oder gemäß dem Anspruch 6 gelöst. Bei einer Spanneinrichtung gemäß dem Anspruch 1 sind die beiden Antriebsstränge aus einem ersten und einem zweiten jeweils aus zwei Riemenscheiben und einem über diese geführten Zahn- oder Treibriemen bestehenden Riementrieb gebildet, wobei auf der Rotorwelle des Antriebsmotors eine Tragnabe drehfest angeordnet ist, auf der die Riemenscheibe des ersten Riementriebes drehfest und die Riemenscheibe des zweiten Riementriebes drehbar gelagert sind, wobei in Spannstellung der Spanneinrichtung die beiden auf der Tragnabe angeordneten Riemenscheiben mit Hilfe einer Servo-Einrichtung miteinander koppelbar sind.

Die drehbar auf der Tragnabe gelagerte Riemenscheibe ist mittels eines axial verschiebbaren Zwischengliedes, das mit der Servo-Einrichtung verbunden ist, mit der ortsfest angeordneten Riemenscheibe zu koppeln, wobei das Zwischenglied mit einer zwischen den beiden Riemenscheiben angeordneten Zahnscheibe fest verbunden ist, die eine Verzahnung aufweist, die mit einer an der ortsfest angeordneten Riemenscheibe angebrachten Gegenverzahnung zusammenwirkt.

Um bei einem eventuellen Ausfall der Servo-Einrichtung eine Sicherung zu schaffen, indem selbsttätig über das Zwischenglied eine Blockierung bewerkstelligt wird, ist es bevorzugt angezeigt, das Zwischenglied unmittelbar oder über die an diesem angebrachte Zahnscheibe durch die Kraft von Federn in axialer Richtung an der Riemenscheibe des zweiten Riementriebes abzustützen, so dass die beiden Riemenscheiben fest miteinander verbunden sind und die Spanneinrichtung blockiert ist.

Die Servo-Einrichtung kann in einfacher Ausgestaltung aus einem in einem Zylinder eingesetzten und beidseitig von Druckmitteln beaufschlagbaren Druckkolben gebildet sein, der drehbar auf dem Zwischenglied gelagert und mit diesem in beiden axialen Richtungen gekoppelt ist. Es ist aber auch möglich, die Servo-Einrichtung aus zwei ortsfest angeordneten Magnetspulen und einem axial verschiebbaren Anker zu bilden, der drehbar auf dem Zwischenglied gelagert und mit diesem in beiden axialen Richtungen gekoppelt ist. Der Servo-Einrichtung kann hierbei ein Wegsensor zur Überwachung des Verstellweges des Zwischengliedes zugeordnet werden.

Bei der Spanneinrichtung des Anspruchs 6 ist die Riemenscheibe des ersten Riementriebes drehbar auf der Tragnabe gelagert werden. In diesem Fall ist zur drehfesten Verbindung der Riemenscheibe mit der Tragnabe eine Schiebemuffe vorzusehen, die drehfest mit der Tragnabe verbunden und mit Hilfe der Servo-Einrichtung, vorzugsweise über eine Zahnkupplung, mit der Riemenscheibe koppelbar ist.

Bei einer lösbaren Verbindung der ersten Riemenscheibe mit der Tragnabe ist es bevorzugt anzeigt, als Antriebsmotor einen Wechselstrom- oder Gleichstrommotor vorzusehen.

Bevorzugt ist es des Weiteren, dem Antriebsmotor einen Sensor zur Bestimmung und/oder Überwachung der Abtriebsdrehzahl zuzuordnen.

Bevorzugt ist ferner angebracht, eine oder beide der auf den Antriebsgliedern der Spanneinrichtung angeordneten bzw. mit diesen verbundenen Riemenscheiben jeweils mit einer bei einer Beschädigung eines Zahn- oder Treibriemens selbsttätig wirksamen Koppelvorrichtung auszustatten, mittels der die beiden Riemenscheiben formschlüssig miteinander verbindbar sind.

Dies kann in der Weise bewerkstelligt werden, indem die Koppelvorrichtungen jeweils aus zwei auf den Außenseiten der Riemenscheiben begrenzt axial verschiebbar angeordneten Anlaufscheiben und einem oder mehreren in eine der Anlaufscheiben eingesetzten, axial verschiebbaren Rastbolzen gebildet werden, die an der Anlaufscheibe abgestützt und durch die Kraft von Federn in zugeordnete in der gegenüberliegenden Riemenscheibe vorgesehene Ausnehmungen einführbar sind.

Wird eine Spanneinrichtung gemäß der Erfindung ausgebildet, indem die Antriebsstränge als Riementriebe ausgebildet werden und auf der Rotorwelle des Antriebsmotors eine Tragnabe fest angeordnet wird, die mittels einer Servo-Einrichtung kuppelbare Riemenscheiben trägt, so ist es möglich, den Antriebsmotor und die Servo-Einrichtung mit Hilfe vorhandener NC-Steuerungen an die jeweiligen Gegebenheiten problemlos anzupassen, so dass ein sicherer und störungsfreier Betrieb über einen langen Zeitraum gewährleistet ist. Außerdem ist sichergestellt, dass zum Beispiel bei Bruch eines Zahn- oder Treibriemens sofort und selbsttätig eine Blockierung der mit den Antriebsgliedern der Spanneinrichtung verbundenen Riemenscheiben erfolgt.

Der Antrieb der Spanneinrichtung ist somit ohne Zwischenschaltung eines Unter- oder Übersetzungsgetriebes und ohne aufwendige Steuerungen gewährleistet. Der Bauaufwand ist demnach gering. Des Weiteren kann gegebenenfalls ein Wechselstrom- oder Gleichstrommotor eingesetzt werden, der im Betrieb auch stillgesetzt werden kann. Es ist somit nicht nur ein geringer Fertigungsaufwand erforderlich, um eine elektrische Spanneinrichtung zu schaffen, sondern es werden auch deren Betriebskosten gering gehalten, und es ist ein störungsfreier Betrieb stets gegeben.

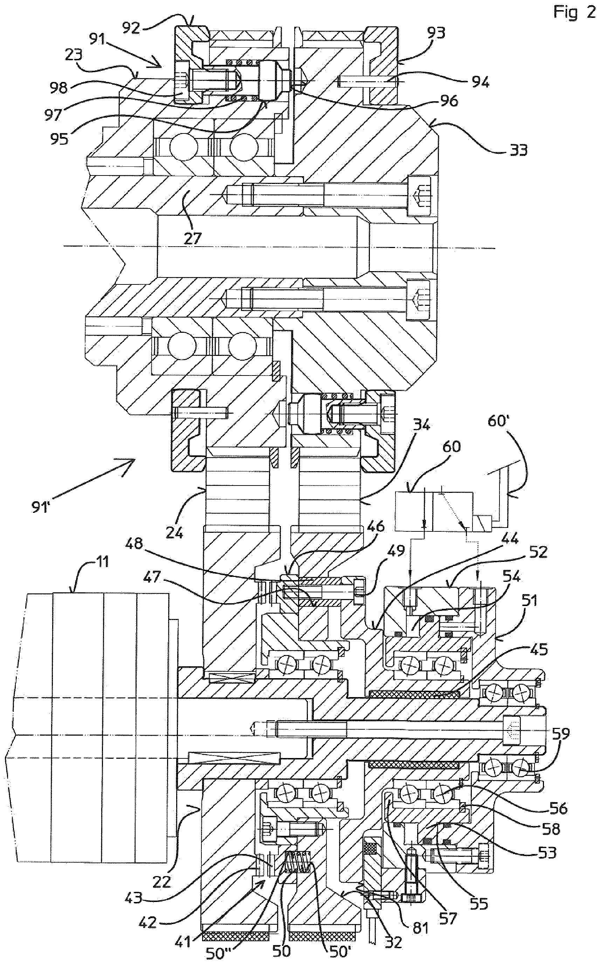

In der Zeichnung sind zwei Ausführungsbeispiele der erfindungsgemäßen Spanneinrichtung dargestellt und nachfolgend im Einzelner erläutert. Hierbei zeigt:

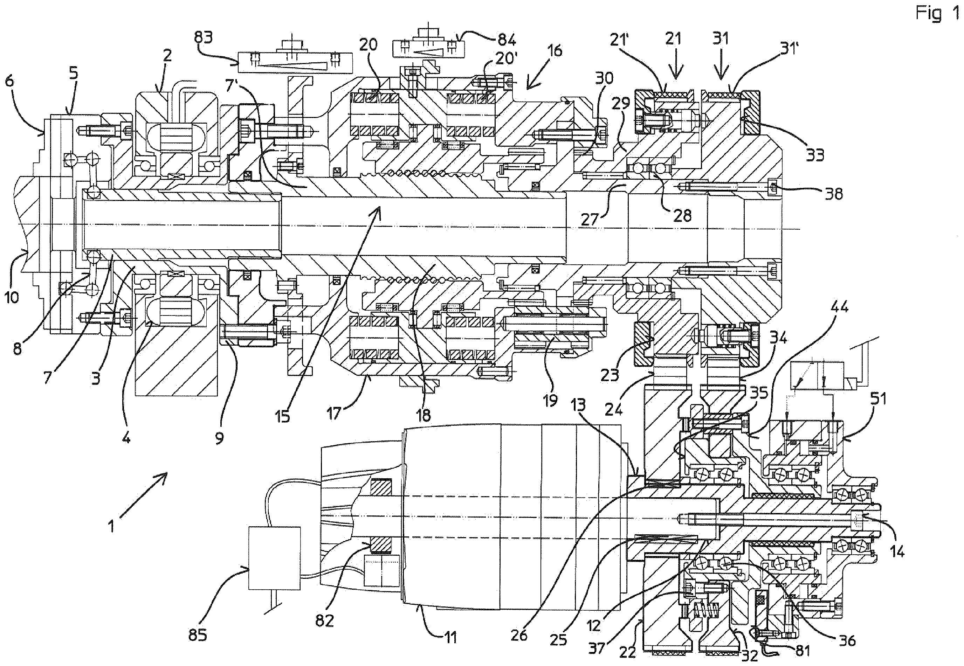

Figur 1 ein erstes Ausführungsbeispiel der Spanneinrichtung einschließlich des Antriebsmotor, in einem Längsschnitt,
Figur 2
   einen Ausschnitt aus Figur 1, in einer vergrößerten Wiedergabe,
Figur 3
   den Ausschnitt nach Figur 2, in einer andersartigen Betriebsstellung, und
Figuren 4 und 5
   die Verbindung der beiden drehbar auf der Tragnabe gelagerten Riemenscheiben mit Hilfe von Elektrokupplungen gemäß einem zweiten Ausführungsbeispiel der Spanneinrichtung, in unterschiedlichen Betriebsstellungen.

Die in Figur 1 dargestellte und mit 1 bezeichnete Spanneinrichtung dient zur Betätigung eines auf einer Werkzeugmaschine 2 angeordneten Kraftspannfutters 5, mittels dessen radial verstellbarer Spannbacken 6 ein zu bearbeitendes Werkstück 10 in dem Kraftspannfutter 5 einzuspannen ist. Die Spannbacken 6 des Kraftspannfutters 5 sind hierbei über Umlenkhebel 8 durch eine axial verstellbare zweiteilige Zugstange 7, 7' betätigbar, die mit einem umschaltbaren elektrischen Antriebsmotor 11 über einen Bewegungswandler 15 in Triebverbindung steht. Mittels des Bewegungswandlers 15 werden die rotatorische Verstellbewegungen des Antriebsmotors 11 in axiale Zustellbewegungen der Zugstange 7, 7' umgewandelt. Auf die Maschinenspindel 3 wirkt ein Elektromotor 4 ein, durch den die Werkzeugmaschine 2 antreibbar ist.

Die Spanneinrichtung 1 weist ein Gehäuse 17 auf, in dem der Bewegungswandler 15 und ein durch Federpakete 20 und 20' gebildeter Kraftspeicher 16 untergebracht sind. Auf der der Werkzeugmaschine 2 zugewandten Seite ist das Gehäuse 17 mit einem abstehenden Steg versehen, an dem ein Flansch befestigt ist. Mit Hilfe von Schrauben ist der Flansch an einem an der Maschinenspindel 3 angeformten weiteren Flansch 9 angebracht.

Dem Bewegungswandler 15 wird die Antriebsenergie über Zwischenglieder 19 zugeführt, die mit einer Spindelmutter 18 in Triebverbindung stehen. Mittels der Spindelmutter 18, auf die die Federpakete 20 und 20' des Kraftspeichers 16 bei Spannvorgängen einwirken, werden die eingeleiteten rotatorischen Bewegungen auf die Zugstange 7' übertragen und dabei in axiale Zustellbewegungen je nach Drehrichtung umgewandelt.

Der Antriebsmotor 11 steht über zwei Antriebsstränge 21 und 31 mit der Spanneinrichtung 1 in Triebverbindung. Um dies zu bewerkstelligen, ist auf der Rotorwelle 12 des Antriebsmotors 11 drehfest mit Hilfe einer Keilverbindung 25 eine Tragnabe 13 angeordnet, die mittels einer Schraube 14 an der Rotorwelle 12 gesichert ist. Auf der Tragnabe 13 sind Riemenscheiben 22 und 32 zweier Riementriebe 21' und 31' angeordnet, die die Antriebsstränge 21 und 31 bilden. Eine der Riemenscheiben, nämlich die Riemenscheibe 22, ist hierbei wiederum mittels einer Keilverbindung 26 drehfest mit der Tragnabe 13 verbunden. Die Riemenscheibe 32 des Riementriebes 31' ist dagegen drehbar auf der Tragnabe 13 gelagert. Über Zahn- oder Treibriemen 24 bzw. 34 sind die Riemenscheiben 22 bzw. 32 mit Riemenscheiben 23 bzw. 33 trieblich verbunden, die an Antriebsgliedern der Spanneinrichtung 1 angekoppelt sind. Die Riemenscheibe 23 ist hierbei mittels Wälzlager 28 drehbar auf einer Hohlwelle 27 gelagert und über eine an einem Ansatz 29 vorgesehene Verzahnung 30 mit den Zwischengliedern 19 verbunden. Die Riemenscheibe 33 dagegen ist mit Hilfe von Schrauben 38 fest an der Hohlwelle 27 angebracht.

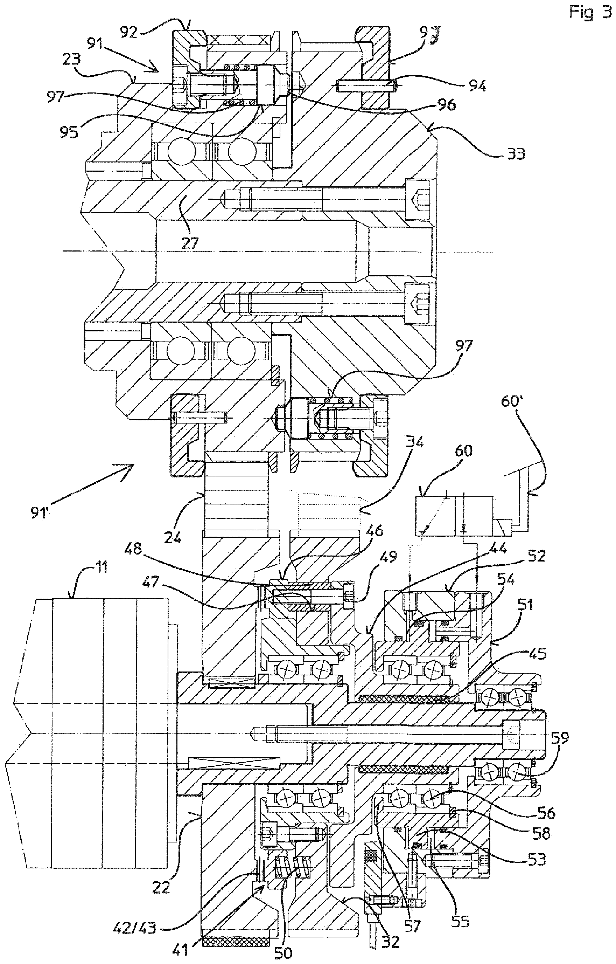

Die Riemenscheibe 32 des Riementriebes 31 ist mittels eines Wälzlagers 36 und einer Tragscheibe 35 drehbar auf der Tragnabe 13 abgestützt. Mittels Schrauben 37 ist hierbei die Riemenscheibe 32 an der Tragscheibe 35 gesichert. Außerdem ist die Riemenscheibe 32 mit einem Zwischenglied 44 verbunden, und zwar, wie dies insbesondere den Figuren 2 und 3 zu entnehmen ist, mit Hilfe von Hülsen 48, die in in die Riemenscheibe 32 eingearbeitete Bohrungen 47 eingesetzt sind, und Schrauben 49, die die Hülse 48 durchgreifen und durch die das Zwischenglied 44 mit einer zwischen den beiden Riemenscheiben 32 und 22 angeordneten Zahnscheibe 46 verbunden ist. Das Zwischenglied 44 ist über ein Gleitlager 45 verschiebbar auf der Tragnabe 13 angeordnet.

Zur Betätigung des Zwischengliedes 44 dient eine Servo-Einrichtung 51 bzw. 61, die bei dem in Figur 1 bis 3 gezeigten Ausführungsbeispiel aus einem ortsfest und mittels eines Lagers 59 drehbar auf der Tragnabe 13 angeordneten Zylinder 52 und einem in diesem eingesetzten, axial verschiebbaren und beidseitig von Druckmittel beaufschlagbaren Kolben 53 besteht. Mittels eines Steuerventils 60 kann den Druckräumen 54 oder 55 wechselweise Druckmittel aus einer Druckmittelzuführungsleitung 60' zugeführt werden, um das Zwischenglied 44 je nach Betriebszustand nach links oder rechts zu verschieben.

Der Druckkolben 53 ist mittels eines Wälzlagers 56 zwar drehbar auf dem Zwischenglied 44 angeordnet, mittels einer angeformten Nase 57 und einem Sprengring 58 aber in axialer Richtung fest mit dem Zwischenglied 44 verbunden.

Das Zwischenglied 44 ist über eine Zahnkupplung 41 mit der Riemenscheibe 22 des Riementriebes 21' mechanisch koppelbar. Dazu ist an dieser auf der dem Zwischenglied 44 zugewandten Seitenfläche eine Verzahnung 42 angebracht, und die mit dem Zwischenglied 44 fest verbundene Zahnscheibe 46 ist mit einer Gegenzahnung 43 ausgestattet, die mit Hilfe der Servo-Einrichtung 51 in die Verzahnung 42 einführbar ist. In diesem Betriebszustand sind die beiden Riemenscheiben 22 und 32 fest miteinander verbunden und die Spanneinrichtung 1 ist blockiert, so dass Bearbeitungsvorgänge ausgeführt werden können.

Um bei einem eventuell Ausfall der Servo-Einrichtung 51 einen Betriebsunfall zu vermeiden, ist die Zahnscheibe 46 und das mit dieser fest verbundene Zwischenglied 44 mittels in das Zwischenglied 44 eingearbeitete Sacklochbohrungen 50' und in der Zahnscheibe 46 vorgesehene Sacklochbohrungen 50" eingesetzte Druckfedern 50 selbsttätig axial verschiebbar. Bei einem Ausfall der Servo-Einrichtung 51 rastet somit durch eine Axialverschiebung nach links, ausgelöst durch die Kraft der Federn 50, die Verzahnung 43 in die Verzahnung 42 ein, so dass die beiden Riementriebe 21' und 31' blockiert sind.

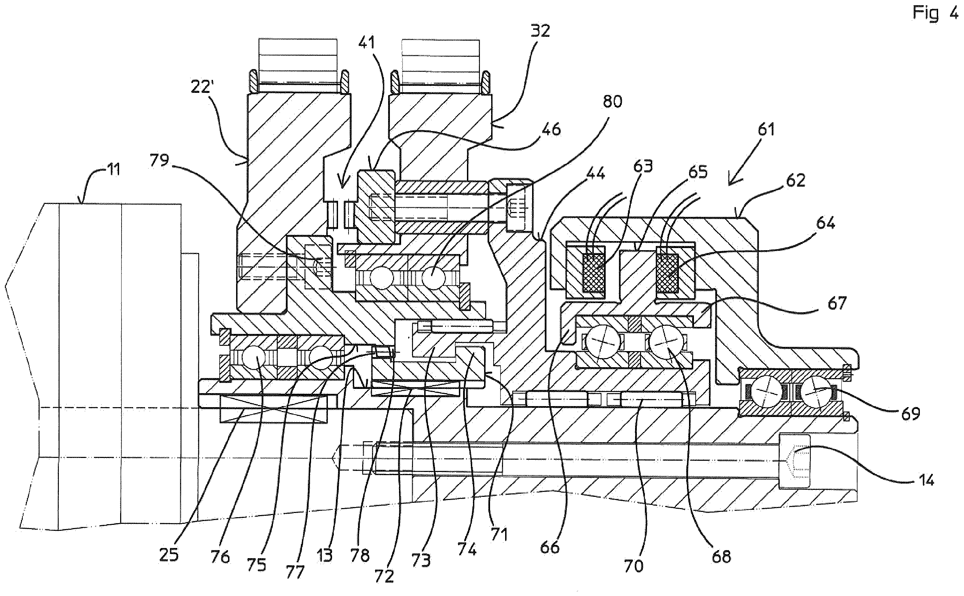

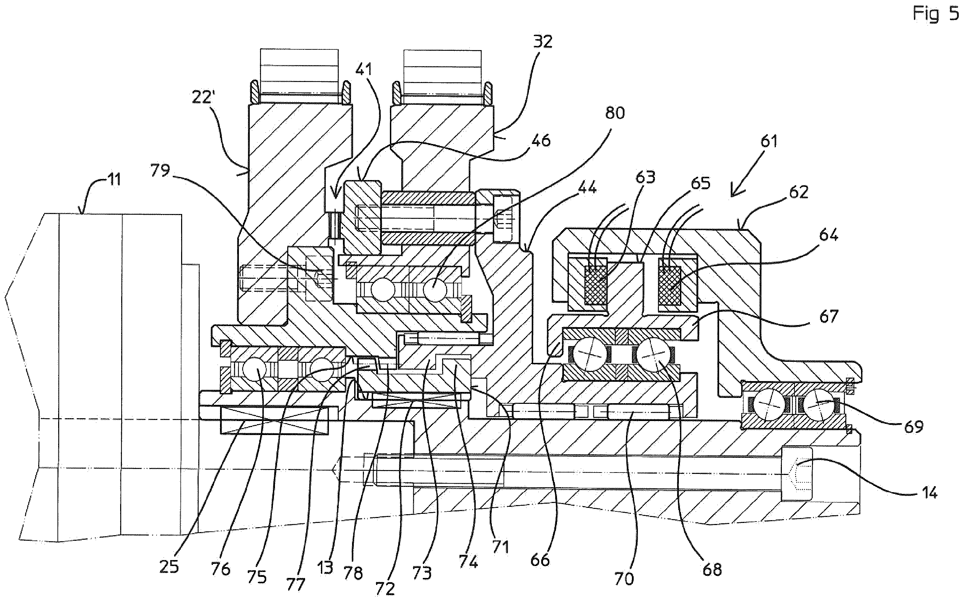

Die Servo-Einrichtung 61 kann aber auch, wie dies in den Figuren 4 und 5 gezeigt ist, aus zwei in einem mittels eines Wälzlagers 69 auf der Tragnabe 13 abgestützten Gehäuse 62 eingesetzte Magnetspulen 63 und 64 bestehen, die mit einem axial verschiebbaren Anker 65 zusammenwirken. Der Anker 65 ist wiederum mittels angeformter Nasen 66 und 67 mit einem Wälzlager 68 gekoppelt, das in das mittels Wälzlager 70 auf der Tragnabe 13 gelagerten Zwischenglied 44 eingesetzt ist. Durch Erregen der Magnetspule 64 ist somit die Zahnkupplung 41 geöffnet ( Figur 4 ). Wird dagegen der Magnetspule 63 elektrische Energie zugeführt ( Figur 5 ), wird durch eine Axialverschiebung des Ankers 65 nach links die Zahnkupplung 41 geschlossen.

Bei der Ausgestaltung nach den Figuren 4 und 5 ist auch die Riemenscheibe 22' mittels eines Wälzlagers 76 drehbar auf der Tragnabe 13 angeordnet. Um aber dennoch eine drehfeste Verbindung zwischen dieser und der Riemenscheibe 22' zu bewerkstelligen, ist eine durch das Zwischenstück 44 betätigbare Schiebemuffe 71 vorgesehen, die mittels einer Keilverbindung 72 drehfest mit der Tragnabe 13 verbunden und mit einem Zwischenglied 75 durch eine Axialverschiebung kuppelbar ist. Mittels Schrauben 79 ist hierbei das Zwischenstück 75, auf dem die Riemenscheibe 32 mit Hilfe von Wälzlagern 80 abgestützt ist, fest mit der Riemenscheibe 22' verbunden.

Bei Erregung der Magnetspule 64 ( Figur 4 ) wird der Anker 65 und das Zwischenstück 44 nach rechts verschoben. Da an diesem ein radial abstehender Ansatz 73 angeformt ist, wird die mit einem Gegenstück 74 ausgestattete Schiebemuffe 71 ebenfalls nach rechts mitgenommen und die an dem Zwischenglied 75 und der Schiebemuffe 71 angebrachten Verzahnungen 77 und 78 werden eingeklinkt, so dass eine drehfeste Verbindung zwischen der Tragnabe 13 und der Riemenscheibe 22' hergestellt ist. Wird dagegen der Magnetspule 63 elektrische Energie zugeführt ( Figur 5 ), wird die Zahnkupplung 41 geschlossen, die Verzahnungen 77 und 78 sind außer Eingriff. Die beiden Riementriebe 21' und 31' sind in diesem Fall miteinander verbunden und somit blockiert. Der Antriebsmotor 11 kann bei dieser Ausgestaltung als Wechselstrom- oder Gleichstrommotor ausgelegt und in dem Betriebszustand nach Figur 5 stillgesetzt werden.

In Figur 1 ist die Betriebsstellung der Spanneinrichtung 1 bei Arbeitsvorgängen dargestellt. Das in dem Kraftspannfutter 5 eingespannte Werkstück 10 kann entsprechend den Vorgaben bearbeitet werden. Die beiden Riementriebe 21' und 31' sind hierbei über die Zahnkupplung 41 miteinander verbunden und laufen gemeinsam mit der Tragnabe 13 um.

Soll jedoch eine Verstellung der Spannbacken 6 vorgenommen werden, um das Werkstück 10 auszuspannen und gegebenenfalls ein anderes Werkstück einzuspannen, so ist mit Hilfe der Servo-Einrichtung 51 die Verbindung zwischen den beiden Riementrieben 21' und 31' zu lösen, indem die Zahnkupplung 41 geöffnet wird, und es ist über den Riementrieb 21' der Spanneinrichtung 1 mit Hilfe des Antriebsmotors 11 Energie zuzuführen. Die Riemenscheibe 22 wird dabei verdreht und auch die über Zwischenglieder 19 mit dieser verbundene Gewindemutter 18, so dass durch diese die Zugstange 7' axial verschoben wird und die Spannbacken 6 nach innen oder außen verstellt werden. Das Werkstück 10 kann somit entfernt oder ein anderes Werkstück kann eingesetzt werden. Nach Beendigung dieses Arbeitsvorganges ist mittels der Servo-Einrichtung 51 wiederum der in Figur 1 dargestellte Betriebszustand herzustellen.

Die Ausgestaltung nach den Figuren 4 und 5 ist in gleicher Weise wirksam. Da jedoch mit Hilfe der Schiebemuffe 71 die Riemenscheibe 22' trieblich von der Tragnabe 13 zu trennen ist, wird im Dauerbetrieb der Spanneinrichtung 1 der Antriebsmotor 11 von den Riementrieben 21' und 31' abgekuppelt, so dass der als Wechselstrom- oder Gleichstrommotor ausgelegte Antriebsmotor 11 in diesem Betriebszustand stillgesetzt und diesem keine Energie zuzuführen ist.

Um bei einem eventuellen Bruch eines der Zahn- oder Treibriemen 24 oder 34 eine Blockade der Antriebsstränge 21 und 31 zu bewerkstelligen, ist, wie dies in den Figuren 2 und 3 im Einzelnen dargestellt ist, den Riemenscheiben 23 und 33 jeweils eine Koppelvorrichtung 91 bzw. 91' zugeordnet. Die Koppelvorrichtungen 91 und 91' bestehen jeweils aus auf den Außenseiten der Riemenscheibe 23 und 33 angeordneten, geringfügig axial verschiebbaren Anlaufscheiben 92 und 93 sowie Rastbolzen 95, die mit der gegenüberliegenden Riemenscheibe 33 bzw. 23 koppelbar sind. Die Anlaufscheiben 92 und 93 sind hierbei jeweils auf Stiften 94 verschiebbar gelagert und liegen an den Zahn- oder Treibriemen 24 und 34 seitlich an.

Bei einem Bruch eines der Zahn- oder Treibriemen 24 oder 34, wie dies in Figur 3 gezeigt ist, wird die Anlaufscheibe 92 oder 93 durch die Kraft von Federn 97, die auf die Rastbolzen 95 einwirken und mit denen die Anlaufscheiben 92, 93 mittels Schrauben 98 verbunden ist, in Richtung der Riemenscheiben 23 oder 33 verschoben, so dass die Rastbolzen 95 in zugeordnete, an den gegenüberliegenden Riemenscheiben 33 bzw. 23 vorgesehene Ausnehmungen 96 eingreifen, um die beiden Riemenscheiben 23 und 33 somit fest miteinander verbunden sind. Die Spannvorrichtung 1 ist in diesem Fall wiederum blockiert.

Zur Überwachung der einzelnen Betriebszustände sind verschiedene Sensoren vorgesehen. Der Servo-Einrichtung 51 ist ein Wegsensor 81 zugeordnet, mittels dem der Verstellweg des Zwischengliedes 44 zu überwachen ist. Des Weiteren ist der Antriebsmotor 11 mit einem Sensor 82 zur Kontrolle der Motordrehzahl ausgestattet, der unmittelbar an ein dem Antriebsmotor 11 vorgeschaltetes Steuergerät 85 angeschlossen ist. Des Weiteren wirkt die Zugstange 7 mit einem Sensor 83 zusammen, mittels dem deren Verstellweg kontrolliert werden kann. Auch der Kraftspeicher 16 ist mit einem Sensor 84 ausgestattet, um die jeweils gegebene Spannkraft des Kraftspannfutters 5 erkennen zu können.

## Patentansprüche

1. Spanneinrichtung (1), insbesondere für Werkzeugmaschinen (2), die beispielsweise mit einem Kraftspannfutter (5) zur Halterung eines Werkstückes (10) versehen und dessen Spannbacken (6) mittels der Spanneinrichtung (1) über eine axial verstellbare Zugstange (7, 7') als Betätigungsglied verstellbar sind, wobei die Spanneinrichtung (1) einen umschaltbaren elektrischen Antriebsmotor (11) zum Auslösen von Spannbewegungen, zwei mit dem Antriebsmotor (11) verbundene Antriebsstränge (21, 31), sowie einen Bewegungswandler (15) zur Umsetzung der Verstellbewegungen der Rotorwelle (12) des Antriebsmotors (11) in die zur Betätigung der Spannbacken (6) erforderlichen axialen Verstellbewegungen der Zugstange (7, 7') aufweist, wobei die beiden Antriebsstränge (21, 31) aus einem ersten und einem zweiten jeweils aus zwei Riemenscheiben (22, 23 bzw. 32, 33) und einem über diese geführten Zahn- oder Treibriemen (24, 34) bestehenden Riementrieb (21', 31') gebildet sind, wobei auf der Rotorwelle (12) des Antriebsmotors (11) eine Tragnabe (13) drehtest angeordnet ist, auf der die Riemenscheibe (22) des ersten Riementriebes (21') drehfest und die Riemenscheibe (32) des zweiten Riementriebes (31') drehbar gelagert sind, wobei in Spannstellung der Spanneinrichtung (1) die beiden auf der Tragnabe (13) angeordneten Riemenscheiben (32, 32) mit Hilfe einer Servo-Einrichtung (51) miteinander koppelbar sind, **dadurch gekennzeichnet, dass** die Spanneinrichtung (1) einen Kraftspeicher (16) zur Aufrechterhaltung der Spannkraft aufweist, und dass die drehbar auf der Tragnabe (13) gelagerte Riemenscheibe (32) mittels eines axial verschiebbaren Zwischengliedes (44), das mittels der Servo-Einrichtung (51) betätigbar ist, mit der drehfest angeordneten Riemenscheibe (22) verbindbar ist und dass das Zwischenglied (44) mit einer zwischen den beiden Riemenscheiben (22, 32) angeordneten Zahnscheibe (46) fest verbunden ist, die eine Verzahnung (43) aufweist, die mit einer an der drehfest angeordneten Riemenscheibe (22) angebrachten Gegenverzahnung (42) zusammenwirkt.

2. Spanneinrichtung nach Anspruch 1, **dadurch gekennzeichnet, dass** das Zwischenglied (44) unmittelbar oder über die an diesem angebrachte Zahnscheibe (46) durch die Kraft von Federn (50) in axialer Richtung an der Riemenscheibe (32) des zweiten Riementriebes (31') abgestützt ist.

3. Spanneinrichtung nach Anspruch 1 oder 2, **dadurch gekennzeichnet, dass** die Servo-Einrichtung (51) aus einem in einem Zylinder (53) eingesetzten und beidseitig von Druckmitteln beaufschlagbaren Druckkolben (54) gebildet ist, der drehbar auf dem Zwischenglied (44) gelagert und mit diesen in beiden axialen Richtungen gekoppelt ist.

4. Spanneinrichtung nach Anspruch 1 oder 2, **dadurch gekennzeichnet, dass** die Servo-Einrichtung (61) aus zwei ortsfest angeordneten Magnetspulen (63, 64) und einem axial verschiebbaren Anker (65) gebildet ist, der drehbar auf dem Zwischenglied (44) gelagert und mit diesem in beiden axialen Richtungen gekoppelt ist.

5. Spanneinrichtung nach einem der Ansprüche 3 oder 4, **dadurch gekennzeichnet, dass** der Servo-Einrichtung (51) ein Wegsensor (81) zur Überwachung des Verstellweges des Zwischengliedes (44) zugeordnet ist.

6. Spanneinrichtung (1), insbesondere für Werkzeugmaschinen (2), die beispielsweise mit einem Kraftspannfutter (5) zur Halterung eines Werkstückes (10) versehen und dessen Spannbacken (6) mittels der Spanneinrichtung (1) über eine axial verstellbare Zugstange (7, 7') als Betätigungsglied verstellbar sind, wobei die Spanneinrichtung (1) einen umschaltbaren elektrischen Antriebsmotor (11) zum Auslösen von Spannbewegungen, zwei mit dem Antriebsmotor (11) verbundene Antriebsstränge (21, 31), sowie einen Bewegungswandler (15) zur Umsetzung der Verstellbewegungen der Rotorwelle (12) des Antriebsmotors (11) in die zur Betätigung der Spannbacken (6) erforderlichen axialen Verstellbewegungen der Zugstange (7, 7') aufweist, wobei die beiden Antriebsstränge (21, 31) aus einem ersten und einem zweiten jeweils aus zwei Riemenscheiben (22', 23 bzw. 32, 33) und einem über diese geführten Zahn- oder Treibriemen (24, 34) bestehenden Riementrieb (21', 31') gebildet sind, wobei auf der Rotorwelle (12) des Antriebsmotors (11) eine Tragnabe (13) drehfest angeordnet ist, auf der die Riemenscheibe (22') des ersten Riementriebes (21 ') und die Riemenscheibe (32) des zweiten Riementriebes (31 ') gelagert sind, wobei in Spannstellung der Spanneinrichtung (1) die beiden auf der Tragnabe (13) angeordneten Riemenscheiben (22', 32) mit Hilfe einer Servo-Einrichtung (61) und eines durch diese axial verschiebbaren Zwischengliedes (44) miteinander koppelbar sind, **dadurch gekennzeichnet, dass** die Spanneinrichtung einen Kraftspeicher (16) zur Aufrechterhaltung der Spannkraft aufweist, dass die Riemenscheibe (22') des ersten Riementriebes (21') und die Riemenscheibe (32) des zweiten Riementriebes (31 ') drehbar auf der Tragnabe (13) gelagert sind, dass das Zwischenglied (44) mit einer zwischen den beiden Riemenscheiben (22', 32) angeordneten Zahnscheibe (46) fest verbunden ist, die eine Verzahnung (43) aufweist, die mit einer an der Riemenscheibe (22') des ersten Riemenantriebes (21') angebrachten Gegenverzahnung (42) zusammenwirkt und dass zur drehfesten Verbindung der Riemenscheibe (22) des ersten Riementriebes (21') mit der Tragnabe (44) eine Schiebemuffe (71) vorgesehen ist, die drehfest mit der Tragnabe (13) verbunden und mit Hilfe der Servo-Einrichtung (61), vorzugsweise über eine Zahnkupplung (77, 78) mit der Riemenscheibe (22) koppelbar ist.

7. Spanneinrichtung nach Anspruch 6, **dadurch gekennzeichnet, dass** bei einer lösbaren Verbindung der Riemenscheibe (22') des erster Riementriebes (21') mit der Tragnabe (13) als Antriebsmotor (11) ein Wechselstrom- oder Gleichstrommotor vorgesehen ist.

8. Spanneinrichtung nach einem oder mehreren der Ansprüche 1 bis 7, **dadurch gekennzeichnet, dass** dem Antriebsmotor (11) ein Sensor (82) zur Bestimmung und/oder Überwachung der Abtriebsdrehzahl zugeordnet ist.

9. Spanneinrichtung nach einem oder mehreren der Ansprüche 1 bis 8, **dadurch gekennzeichnet, dass** eine oder beide der auf der Antriebsgliedern (27) der Spanneinrichtung (1) angeordneten bzw. mit diesen verbundenen Riemenscheiben (23, 33) jeweils mit einer bei einer Beschädigung eines Zahn- oder Treibriemens (24 bzw. 34) selbsttätig wirksamen Koppelvorrichtung (91, 91 ')versehen sind, mittels der die beiden Riemenscheiben (23, 33) formschlüssig miteinander verbindbar sind.

10. Spanneinrichtung nach Anspruch 9, **dadurch gekennzeichnet, dass** die Koppelvorrichtung (91, 91 ') jeweils aus zwei auf den Außenseiten der Riemenscheiben (23 bzw. 33) begrenzt axial verschiebbar angeordneten Anlaufscheiben (92, 93) und einem oder mehreren in eine der Anlaufscheiben (92) eingesetzten und axial verschiebbaren Rastbolzen (93) gebildet sind, die an der Anlaufscheiben (92) abgestützt und durch die Kraft von Federn (97) in zugeordnete in der gegenüberliegenden Riemenscheibe (33 bzw. 23) vorgesehene Ausnehmungen (96) einführbar sind.

## Claims

1. Clamping device (1), in particular for machine tools (2) which are provided, for example with a heavy-duty chuck (5) for holding a workpiece (10) and the clamping jaws (6) of which can be adjusted by means of the clamping device (1) via an axially adjustable connecting rod (7, 7') as the actuating element, wherein the clamping device (1) has a reversible electric drive motor (11) to trigger clamping movements, two drive trains (21, 31) connected to the drive motor (11), and a motion converter (15) to convert the adjusting movements of the rotor shaft (12) of the drive motor (11) into the axial adjusting movements of the connecting rod (7, 7') required to actuate the clamping jaws (6), wherein the two drive trains (21, 31) are formed from a first and a second belt drive (21', 31') consisting respectively of two pulleys (22, 23 or 32, 33) and a toothed belt or driving belt (24, 34) guided over the latter, wherein a supporting hub (13) is arranged to be resistant to rotation on the rotor shaft (12) of the drive motor (11), on which supporting hub (13) the pulley (22) of the first belt drive (21') is mounted to be resistant to rotation and the pulley (32) of the second belt drive (31') is mounted to be rotatable, wherein in the clamping position of the clamping device (1), the two pulleys (32, 32) arranged on the supporting hub (13) can be coupled to one another with the aid of a servo device (51), **characterised in that** the clamping device (1) has an accumulator (16) to maintain the clamping force, and **in that** the pulley (32) mounted to be rotatable on the supporting hub (13) can be connected to the pulley (22) arranged to be resistant to rotation by means of an axially displaceable intermediate element (44), which can be actuated by means of the servo device (51), and **in that** the intermediate element (44) is firmly connected to a toothed disc (46) arranged between the two pulleys (22, 32) which has toothing (43) which cooperates with counter-toothing (42) attached to the pulley (22) arranged to be resistant to rotation.

2. Clamping device according to claim 1, **characterised in that** the intermediate element (44) is supported directly or via the toothed disc (46) attached to the latter by the force of springs (50) in axial direction on the pulley (32) of the second belt drive (31').

3. Clamping device according to claim 1 or 2, **characterised in that** the servo device (51) is formed from a pressure piston (54) inserted in a cylinder (53) and impacted on both sides by pressure means and which is mounted to be rotatable on the intermediate element (44) and coupled to the latter in both axial directions.

4. Clamping device according to claim 1 or 2, **characterised in that** the servo device (61) is formed from two magnetic coils (63, 64) arranged to be fixed and an axially displaceable anchor (65) which is mounted to be rotatable on the intermediate element (44) and coupled to the latter in both axial directions.

5. Clamping device according to one of claims 3 or 4, **characterised in that** a displacement sensor (81) to monitor the adjustment path of the intermediate element (44) is assigned to the servo device (51).

6. Clamping device (1), in particular for machine tools (2) which are provided, for example with a heavy-duty chuck (5) for holding a workpiece (10) and the clamping jaws (6) of which can be adjusted by means of the clamping device (1) via an axially adjustable connecting rod (7, 7') as the actuating element, wherein the clamping device (1) has a reversible electric drive motor (11) to trigger clamping movements, two drive trains (21, 31) connected to the drive motor (11), and a motion converter (15) to convert the adjusting movements of the rotor shaft (12) of the drive motor (11) into the axial adjusting movements of the connecting rod (7, 7') required to actuate the clamping jaws (6), wherein the two drive trains (21, 31) are formed from a first and a second belt drive (21', 31') consisting respectively of two pulleys (22', 23 or 32, 33) and a toothed belt or driving belt (24, 34) guided over the latter, wherein a supporting hub (13) is arranged to be resistant to rotation on the rotor shaft (12) of the drive motor (11), on which supporting hub (13) the pulley (22') of the first belt drive (21') and the pulley (32) of the second belt drive (31') are mounted, wherein in the clamping position of the clamping device (1), the two pulleys (22', 32) arranged on the supporting hub (13) can be coupled to one another with the aid of a servo device (61) and of an intermediate element (44) axially displaceable due to the latter, **characterised in that** the clamping device has an accumulator (16) to maintain the clamping force, **in that** the pulley (22') of the first belt drive (21') and the pulley (32) of the second belt drive (31') are mounted to be rotatable on the supporting hub (13), **in that** the intermediate element (44) is firmly connected to a toothed disc (46) arranged between the two pulleys (22', 32) which has toothing (43) which cooperates with counter-toothing (42) attached to the pulley (22') of the first belt drive (21') and **in that** a sliding sleeve (71), which is connected to the supporting hub (13) to be resistant to rotation and can be coupled to the pulley (22) with the aid of the servo device (61), preferably via a toothed coupling (77, 78), is provided for rotation-resistant connection of the pulley (22) of the first belt drive (21') to the supporting hub (44).

7. Clamping device according to claim 6, **characterised in that** for releasable connection of the pulley (22') of the first belt drive (21') to the supporting hub (13), an alternating-current motor or direct-current motor is provided as the drive motor (11).

8. Clamping device according to one or more of claims 1 to 7, **characterised in that** a sensor (82) for determining and/or monitoring the output speed is assigned to the drive motor (11).

9. Clamping device according to one or more of claims 1 to 8, **characterised in that** one or both of the pulleys (23, 33) arranged on the drive elements (27) of the clamping device (1) or connected to the latter are provided respectively with an automatically active coupling device (91, 91') when there is damage to a toothed belt or driving belt (24 or 34), by means of which the two pulleys (23, 33) can be positively connected to one another.

10. Clamping device according to claim 9, **characterised in that** the coupling device (91, 91') are formed respectively from two thrust washers (92, 93) arranged on the outer sides of the pulleys (23 or 33) to be axially displaceable to a limited extent and one or more axially displaceable locking bolts (93) inserted in one of the thrust washers (92) and which are supported on the thrust washers (92) and can be introduced by the force of springs (97) into assigned recesses (96) provided in the opposite pulley (33 or 23).

## Revendications

1. Dispositif de serrage (1) en particulier pour des machines-outils (2) qui sont pourvues par exemple d'un mandrin de serrage (5) pour maintenir une pièce (10) et dont les mâchoires de serrage (6) peuvent être ajustées au moyen du dispositif de serrage (1) sur une tige de traction (7, 7') pouvant être ajustée axialement en tant qu'organe d'actionnement, dans lequel le dispositif de serrage (1) présente un moteur électrique d'entraînement (11) commutable pour déclencher des mouvements de serrage, deux chaînes cinématiques (21, 31) reliées au moteur d'entraînement (11), ainsi qu'un convertisseur de déplacement (15) pour convertir les déplacements d'ajustement de l'arbre de rotor (12) du moteur d'entraînement (11) en les déplacements d'ajustement axiaux de la tige de traction (7, 7') requis pour l'actionnement des mâchoires de serrage (6),
dans lequel les deux chaînes cinématiques (21, 31) sont formées à partir d'un premier et d'un deuxième entraînement à courroie (21', 31') constitués respectivement de deux poulies (22, 23 ou 32, 33) et d'une courroie dentée ou de transmission (24, 34) guidée par l'intermédiaire de celles-ci, dans lequel est disposé, de manière solidaire en rotation, sur l'arbre de rotor (12) du moteur d'entraînement (11) un moyeu de support (13), sur lequel la poulie (22) du premier entraînement à courroie (21') est montée de manière solidaire en rotation et la poulie (32) du deuxième entraînement à courroie (31') est montée de manière à pouvoir tourner, dans lequel en position de serrage du dispositif de serrage (1), les deux poulies (32, 32) disposées sur le moyeu de support (13) peuvent être couplées l'une à l'autre à l'aide d'un dispositif d'asservissement (51),
**caractérisé en ce que** le dispositif de serrage (1) présente un accumulateur de force (16) pour maintenir la force de serrage, et que la poulie (32) montée de manière à pouvoir tourner sur le moyeu de support (13) peut être reliée à la poulie (22) disposée de manière solidaire en rotation au moyen d'un organe intermédiaire (44) pouvant être coulissé axialement, qui est actionnable au moyen du dispositif d'asservissement (51),
et que l'organe intermédiaire (44) est relié de manière solidaire à une rondelle dentée (46) disposée entre les deux poulies (22, 32), qui présente une denture (43) qui coopère avec une contre-denture (42) installée sur la poulie (22) disposée de manière solidaire en rotation.

2. Dispositif de serrage selon la revendication 1, **caractérisé en ce que**
l'organe intermédiaire (44) est soutenu directement ou par l'intermédiaire de la rondelle crantée (46) installée sur celui-ci par la force de ressorts (50) dans une direction axiale sur la poulie (32) du deuxième entraînement à courroie (31').

3. Dispositif de serrage selon la revendication 1 ou 2,
**caractérisé en ce que** le dispositif d'asservissement (51) est formé à partir d'un piston de pression (54) inséré dans un cylindre (53) et pouvant être soumis de part et d'autre à l'action de moyens de pression, qui est monté de manière à pouvoir tourner sur l'organe intermédiaire (44) et qui est couplé à celui-ci dans deux directions axiales.

4. Dispositif de serrage selon la revendication 1 ou 2,
**caractérisé en ce que** le dispositif d'asservissement (61) est formé à partir de deux bobines magnétiques (63, 64) disposées de manière stationnaire et d'un ancrage (65) pouvant être coulissé axialement, qui est monté de manière à pouvoir tourner sur l'organe intermédiaire (44) et est couplé à celui-ci dans les deux directions axiales.

5. Dispositif de serrage selon l'une des revendications précédentes 3 ou 4,
**caractérisé en ce qu'**un capteur de déplacement (81) pour surveiller le trajet d'ajustement de l'organe intermédiaire (44) est affecté au dispositif d'asservissement (51).

6. Dispositif de serrage (1), en particulier pour des machines-outils (2) qui sont pourvues par exemple d'un mandrin de serrage (5) pour maintenir une pièce (10) et dont les mâchoires de serrage (6) peuvent être ajustées au moyen du dispositif de serrage (1) par l'intermédiaire d'une tige de traction (7, 7') pouvant être ajustée axialement en tant qu'organe d'actionnement, dans lequel le dispositif de serrage (1) présente un moteur d'entraînement (11) électrique commutable pour déclencher des déplacements de serrage, deux chaînes cinématiques (21, 31) reliées au moteur d'entraînement (11), ainsi qu'un convertisseur de déplacement (15) pour convertir les déplacements d'ajustement de l'arbre de rotor (12) du moteur d'entraînement (11) en les déplacements d'ajustement axiaux de la tige de traction (7, 7') requis pour l'actionnement des mâchoires de serrage (6), dans lequel les deux chaînes cinématiques (21, 31) sont formées à partir d'un premier et d'un deuxième entraînements à courroie (21', 31') constitués respectivement de deux poulies (22', 23 ou 32, 33) et d'une courroie dentée ou de transmission (24, 34) guidée par l'intermédiaire de celles-ci, dans lequel est disposé, de manière solidaire en rotation, sur l'arbre de rotor (12) du moteur d'entraînement (11), un moyeu de support (13) sur lequel la poulie (22') du premier entraînement à courroie (21') et la poulie (32) du deuxième entraînement à courroie (31') sont montées, dans lequel en position de serrage du dispositif de serrage (1), les deux poulies (22', 32) disposées sur le moyeu de support (13) peuvent être couplées l'une à l'autre à l'aide d'un dispositif d'asservissement (61) et d'un organe intermédiaire (44) pouvant être coulissé axialement à travers celui-ci, **caractérisé en ce que** le dispositif de serrage présente un accumulateur de force (16) pour maintenir la force de serrage, que la poulie (22') du premier entraînement à courroie (21') et la poulie (32) du deuxième entraînement à courroie (31') sont montées de manière à pouvoir tourner sur le moyeu de support (13), que l'organe intermédiaire (44) est relié de manière solidaire à une rondelle crantée (46) disposée entre les deux poulies (22', 32), qui présente une denture (43) qui coopère avec une contre-denture (42) installée sur la poulie (22') du premier entraînement à courroie (21'), et que pour relier de manière solidaire en rotation la poulie (22) du premier entraînement à courroie (21') au moyeu de support (44), un manchon coulissant (71) est prévu, qui est relié de manière solidaire en rotation au moyeu de support (13) et qui peut être couplé à la poulie (22) à l'aide du dispositif d'asservissement (61), de préférence par l'intermédiaire d'un couplage denté (77, 78).

7. Dispositif de serrage selon la revendication 6, **caractérisé en ce que**
Lorsque la poulie (22') du premier entraînement à courroie (21') est reliée de manière amovible au moyeu de support (13), un moteur à courant alternatif ou à courant continu est prévu en tant que moteur d'entraînement (11).

8. Dispositif de serrage selon l'une ou plusieurs des revendications 1 à 7,
**caractérisé en ce qu'**un capteur (82) destiné à déterminer et/ou à surveiller la vitesse de rotation de sortie est affecté au moteur d'entraînement (11).

9. Dispositif de serrage selon l'une ou plusieurs des revendications 1 à 8,
**caractérisé en ce qu'**une ou les deux des poulies (23, 33) disposées sur les organes d'entraînement (27) du dispositif de serrage (1) ou reliées à ceux-ci sont pourvues respectivement d'un dispositif de couplage (91, 91') efficace automatiquement dans le cas d'un endommagement d'une courroie dentée ou de transmission (24 ou 34), au moyen duquel les deux poulies (23, 33) peuvent être reliées l'une à l'autre par complémentarité de forme.

10. Dispositif de serrage selon la revendication 9, **caractérisé en ce que**
les dispositifs de couplage (91, 91') sont formés respectivement à partir de deux rondelles de butée (92, 93) disposées à coulissement axial de manière limitée sur les côtés extérieurs des poulies (23 ou 33) et d'un ou de plusieurs boulons d'enclenchement (93) insérés dans l'une des rondelles de butée (92) et pouvant être coulissés axialement, qui sont soutenus sur la rondelle de butée (92) et peuvent être introduits dans des évidements (96) associés prévus dans la poulie (33 ou 23) faisant face par la force de ressorts (97).
